# FASCICULE DE BREVET EUROPEEN

(11) **EP 2 167 381 B1**
(45) Date de publication et mention de la délivrance du brevet: **25.01.2012**
(21) Numéro de dépôt: 08786002.9
(22) Date de dépôt: 09.07.2008
(51) Int. Cl.: B64C 9/22, B64D 15/12, F16G 13/16, H02G 11/00

(54) **CHAINE PORTEUSE DE CABLES POUR VOLET MOBILE DE BORD D'ATTAQUE D'UNE AILE D'AERONEF**
KABELTRÄGERKETTE FÜR DIE MOBILE NASENKLAPPE EINER FLUGZEUGTRAGFLÄCHE
CABLE-CARRYING CHAIN FOR AN AIRCRAFT WING LEADING EDGE MOBILE FLAP

(30) Priorité: 13.07.2007 BE 200700350
(43) Date de publication de la demande: 31.03.2010
(73) Titulaire: Sonaca S.A., 6041 Gosselies (BE)
(72) Inventeur: CREPIN, Jean-Philippe, B-7800 Ath (BE); GODFROID, Xavier, B-1348 Louvain-la-neuve (BE); SOUCHON, Olivier, B-6280 Loverval (BE)
(74) Mandataire: Ilgart, Jean-Christophe
(86) Numéro de dépôt international: PCT/EP2008/058895
(87) Numéro de publication internationale: WO 2009/010431

(56) Documents cités:
- EP-A- 0 230 684
- EP-A- 0 277 389
- WO-A-2006/027624
- US-A1- 2007 034 747
- US-B1- 6 387 002

## Description

### DOMAINE TECHNIQUE

La présente invention se rapporte de façon générale au domaine des moyens permettant de porter des câbles fixés sur deux pièces susceptibles d'être mises en mouvement l'une par rapport à l'autre, selon une trajectoire circulaire.

Ces moyens permettant de porter des câbles, également dénommés moyens d'acheminement ou moyens de guidage des câbles entre deux pièces mobiles l'une par rapport à l'autre, présentent une conception leur permettant de suivre le déplacement relatif entre les deux pièces sur lesquelles les câbles sont raccordés. Ces derniers peuvent par exemple être des câbles électriques, ou autres.

L'invention se rapporte plus spécifiquement au domaine des ailes d'aéronef, de tels moyens porteur de câbles étant effectivement prévus entre un corps central fixe d'aile et un volet mobile de bord d'attaque, destiné à être déplacé en rotation par rapport au corps central fixe, selon une trajectoire circulaire susceptible de s'inscrire sur une sphère. A titre indicatif, les câbles portés par les moyens prévus à cet effet sont, par exemple, des câbles électriques destinés à alimenter un système de dégivrage électrique intégré au volet mobile de bord d'attaque.

### ETAT DE LA TECHNIQUE ANTERIEURE

Sur les aéronefs, chacune des deux ailes de la voilure est généralement équipée de volets mobiles hypersustentateurs montés au bord d'attaque et au bord de fuite de l'aile.

De façon connue, les volets sont déployés pour les phases d'atterrissage et de décollage afin d'augmenter la portance à faible ou moyenne vitesse. Par ailleurs, en vol de croisière à grande vitesse, les volets mobiles sont rentrés pour limiter la résistance à l'avancement de l'aéronef. De plus, toujours de façon connue de l'homme du métier, le déplacement de chaque volet s'effectue à l'aide de mécanismes logés essentiellement dans une partie avant ou arrière d'un corps central fixe d'aile, tel que cela est notamment connu du document EP 0 818 387.

Plus précisément, ces mécanismes de mise en mouvement permettent de déplacer chaque volet mobile de bord d'attaque selon une trajectoire circulaire par rapport au corps central fixe d'aile, entre une position rentrée dans laquelle le volet épouse sensiblement le corps fixe, et une position déployée dans laquelle ce volet est déplacé vers l'avant.

Le volet mobile de bord d'attaque intègre des systèmes qui doivent être alimentés en permanence, par exemple électriquement, quelle que soit la position occupée par ce volet. Il s'agit, entre autres, d'un système de dégivrage intégré au volet mobile, alimenté électriquement par un ou plusieurs câbles fixés sur le corps central fixe d'aile, dont la fonction est donc d'assurer le transfert de puissance électrique entre ce même corps fixe, et le volet concerné.

Ainsi, il est mis en place des moyens mécaniques permettant de porter les câbles entre le corps fixe et le volet mobile de bord d'attaque, ces moyens présentant une conception adaptée leur permettant de se déformer afin de suivre le déplacement relatif en rotation du volet mobile, par rapport au corps central fixe d'aile.

De telles structures mécaniques déployables de support de câbles sont, par exemple, connues des documents WO 2006/027624 et FR 2 874 370. Malgré leur utilisation répandue, elles présentent plusieurs inconvénients parmi lesquels on compte un fort encombrement rencontré lors de leur déploiement. Cet inconvénient relatif à l'encombrement important dans la direction de l'envergure de l'aile, et/ou dans celle de sa corde, est d'autant plus contraignant que ces structures mécaniques sont logées dans une partie avant du corps central fixe d'aile qui est déjà fortement encombrée, notamment en raison de la présence des mécanismes de mise en mouvement du volet. Les risques d'interférence mécanique entre les différents éléments présents au sein de la partie avant du corps central fixe sont donc non négligeables.

De plus, la conception de ces structures mécaniques n'est que faiblement adaptée à la nature rotative du déplacement relatif du volet mobile par rapport au corps central fixe. Il en découle un autre inconvénient qui est celui de prévoir, sur le corps central fixe, une ouverture importante pour le passage de la structure mécanique lors de son déploiement. Une telle ouverture est préjudiciable au rendement aérodynamique, et doit être limitée ou fermée par un obturateur et un joint aérodynamique. Ceci complexifie et alourdit significativement le concept global du système mécanique.

Le document US 2007/0034747 A1 qui décrit aussi une telle structure mécanique déployable est considéré comme le document de l'art antérieur le plus proche.

De plus, l'emploi des moyens mécaniques connus, reliant le volet mobile de bord d'attaque au corps central fixe, génère un impact néfaste sur les performances aérodynamiques.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a pour objet une aile d'aéronef comprenant un corps central fixe d'aile, ainsi qu'un volet mobile de bord d'attaque destiné à être déplacé en rotation par rapport audit corps central fixe selon une trajectoire circulaire s'inscrivant sur une sphère de centre (C), situé sur un axe de rotation du volet mobile de bord d'attaque par rapport audit corps central fixe d'aile. Selon l'invention, ladite aile comprend en outre un ensemble comprenant une chaîne ainsi qu'au moins un câble porté par ladite chaîne raccordée fixement à ses deux extrémités respectivement au corps central fixe et au volet mobile de bord d'attaque, ladite chaîne comprenant des maillons articulés les uns aux autres selon des axes d'articulation qui convergent au centre (C).

La chaîne employée se révèle ainsi tout à fait adaptée pour relier deux pièces destinées à être déplacées relativement l'une par rapport à l'autre selon une trajectoire circulaire, et plus généralement selon une trajectoire quelconque s'inscrivant sur une sphère ayant pour centre le point unique vers lequel convergent les axes d'articulation des maillons. En effet, la cinématique du mouvement de la chaîne, rencontrée suite au mouvement de la pièce mobile par rapport à l'autre, est alors proche de la cinématique de cette pièce mobile. De ce fait, l'encombrement associé à la chaîne porteuse de câbles selon l'invention s'avère globalement optimisé.

A cet égard, dans le cas préféré où lesdits maillons articulés sont agencés sur une surface sphérique ayant également pour centre ledit point unique vers lequel convergent lesdits axes d'articulation, la cinématique du mouvement de la chaîne s'inscrit globalement sur cette même surface sphérique. La cinématique observée est alors extrêmement proche de la cinématique d'une pièce mobile en rotation par rapport à une autre, selon un axe de rotation passant par le centre de la surface sphérique, correspondant au point unique vers lequel convergent les axes d'articulation des maillons de la chaîne.

A cet égard, il est noté que dans un état statique quelconque des maillons, ceux-ci sont également agencés sur un cône de sommet correspondant au point unique vers lequel convergent lesdits axes d'articulation. De plus, chaque maillon en mouvement se déplace donc sur la surface sphérique précitée, mais également sur une surface conique de sommet correspondant au point unique vers lequel convergent lesdits axes d'articulation.

Dans le cas présent où la trajectoire du mouvement relatif entre les deux pièces est circulaire, cette trajectoire agencée sur la sphère de centre correspondant au point unique vers lequel convergent les axes d'articulation des maillons n'est pas nécessairement située dans un plan équateur de cette sphère, mais peut être agencée dans tout plan traversant cette sphère de façon orthogonale à l'axe de rotation de la pièce mobile par rapport à l'autre. Cette spécificité offre une large possibilité de conception pour la chaîne selon l'invention, permettant de s'adapter au mieux aux contraintes d'encombrement spécifiques à chaque cas.

La chaîne employée permet donc de porter les câbles entre le corps fixe et le volet mobile de bord d'attaque, avec une conception particulièrement bien adaptée pour se déformer avec un encombrement limité suite au déplacement relatif en rotation du volet mobile, par rapport au corps central fixe d'aile.

Cette diminution de l'encombrement global, dans la direction de l'envergure de l'aile et dans celle de sa corde, se traduit avantageusement par une facilité d'implantation au sein de la partie avant du corps central fixe d'aile, qui est pourtant déjà fortement encombrée, notamment en raison de la présence des mécanismes de mise en mouvement du volet. A cet égard, il est noté que les risques d'interférence mécanique avec les différents éléments déjà présents au sein de la partie avant du corps central fixe sont avantageusement amoindris. En particulier, la cinématique de la chaîne n'est aucunement perturbée par l'arbre d'actionnement rotatif du volet, pourtant agencé selon la direction d'envergure au niveau de la partie avant du corps central fixe d'aile, étant donné que la conception de la chaîne propre à la présente invention permet à celle-ci de se déplacer autour de cet arbre d'actionnement, selon ladite surface sphérique précitées.

En outre, il est rappelé que le point unique vers lequel convergent les axes d'articulation des maillons peut être fixé de façon libre sur l'axe de rotation du volet mobile, ce qui permet de s'adapter au mieux, d'un point de vue encombrement, à l'architecture interne de l'aile concernée.

De plus, en raison de la conception parfaitement adaptée à la nature rotative du déplacement relatif du volet mobile par rapport au corps central fixe, l'ouverture nécessaire sur le corps central fixe, pour le passage de la chaîne, est fortement diminuée. Une telle diminution de l'ouverture permet d'augmenter le rendement aérodynamique global de l'aéronef.

De préférence, chacun desdits maillons articulés définit au moins un logement de passage de câble, débouchant de part et d'autre dudit maillon. Alternativement, il pourrait être prévu que le/les câbles soient agencés extérieurement par rapport aux maillons, et non intérieurement, sans sortir du cadre de l'invention.

De préférence, l'amplitude de pivotement relatif entre deux maillons quelconques, et directement consécutifs, est limitée par un système de butées, cette amplitude de pivotement étant par exemple inférieure ou égale à 30°, et de manière plus générale fixée de manière à respecter la limite en flexion des câbles concernés.

Naturellement, le/les câbles de l'ensemble portés par la chaîne sont raccordés d'une part à la première pièce et d'autre part à la seconde pièce, entre lesquelles il est recherché une connexion électrique, ou autre.

De préférence, ladite chaîne présente, en vue de dessus et quelle que soit la position dudit volet mobile de bord d'attaque par rapport au corps central fixe d'aile, une première portion sensiblement rectiligne initiée à partir d'un premier maillon d'extrémité de chaîne monté fixement sur ledit corps central fixe d'aile, une partie courbe, ainsi qu'une seconde portion sensiblement rectiligne terminée par un second maillon d'extrémité de chaîne monté fixement sur ledit volet mobile de bord d'attaque. Dans un tel cas, on prévoit que ladite partie courbe forme sensiblement une portion de cercle en vue de dessus, de préférence un demi-cercle, avec des première et seconde portions rectilignes restant sensiblement parallèles et à égale distance au cours du mouvement de la chaîne porteuse de câbles, lors du déploiement / de la rentrée du volet mobile.

Ladite chaîne porte un ou plusieurs câbles électriques d'alimentation d'un système de dégivrage intégré au volet mobile de bord d'attaque. Dans un tel cas, d'autres câbles électriques, connectés à des capteurs associés au système de dégivrage et également intégrés au volet, peuvent aussi être portés par la chaîne objet de la présente invention.

De préférence, il est possible de protéger les câbles et la chaîne elle-même au moyen d'une gaine plastique souple, externe à la chaîne, ne perturbant pas son fonctionnement. La protection conférée est prévue vis-à-vis des chocs en maintenance, et contre l'agression des agents chimiques et fluides de l'aéronef. En outre, le premier maillon de la chaîne peut éventuellement intégrer une métallisation permettant d'assurer une protection contre la foudre.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en perspective d'un aéronef ;
- la figure 2 représente une vue schématique et partielle en coupe d'une aile d'aéronef selon la présente invention, munie d'un volet mobile de bord d'attaque ;
- la figure 3 représente une vue similaire à celle montrée sur la figure 2, sur laquelle il a été représenté une chaîne porteuse de câbles, raccordée fixement à ses deux extrémités respectivement au corps central fixe de l'aile et au volet mobile de bord d'attaque de celle-ci ;

- la figure 4 représente une vue en perspective de celle montrée sur la figure 3 ;
- la figure 5 représente une vue en perspective schématisant l'une des particularités de la chaîne porteuse de câbles, relative à l'articulation de ses maillons ;
- la figure 6 représente une vue de côté de celle montrée sur la figure 5, la chaîne étant montrée en traits pleins dans sa position telle qu'occupée lorsque le volet mobile est rentré, et montrée en pointillés dans sa position telle qu'occupée lorsque le volet mobile est déployé ;
- la figure 7 représente une vue de dessus de la chaîne porteuse de câbles, dans ses deux positions montrées sur la figure 6 ;
- la figure 8 représente une vue en perspective de l'un des maillons centraux de la chaîne porteuse de câbles montrée sur les figures précédentes ;
- la figure 9 montre une vue en perspective d'une pluralité de maillons centraux articulés et en butée les uns par rapport aux autres ;
- la figure 10 montre une vue en perspective d'un maillon d'extrémité de chaîne monté fixement sur le corps central fixe d'aile ;
- la figure 11 montre une vue en perspective d'un maillon d'extrémité de chaîne monté fixement sur le volet mobile de bord d'attaque ; et
- la figure 12 représente une vue en perspective depuis l'intérieur du volet mobile de bord d'attaque, montrant son raccordement avec le maillon d'extrémité de chaîne montré sur la figure 11.

### EXPOSÉ DÉTAILLÉ DE MODES DE RÉALISATION PRÉFÉRÉS

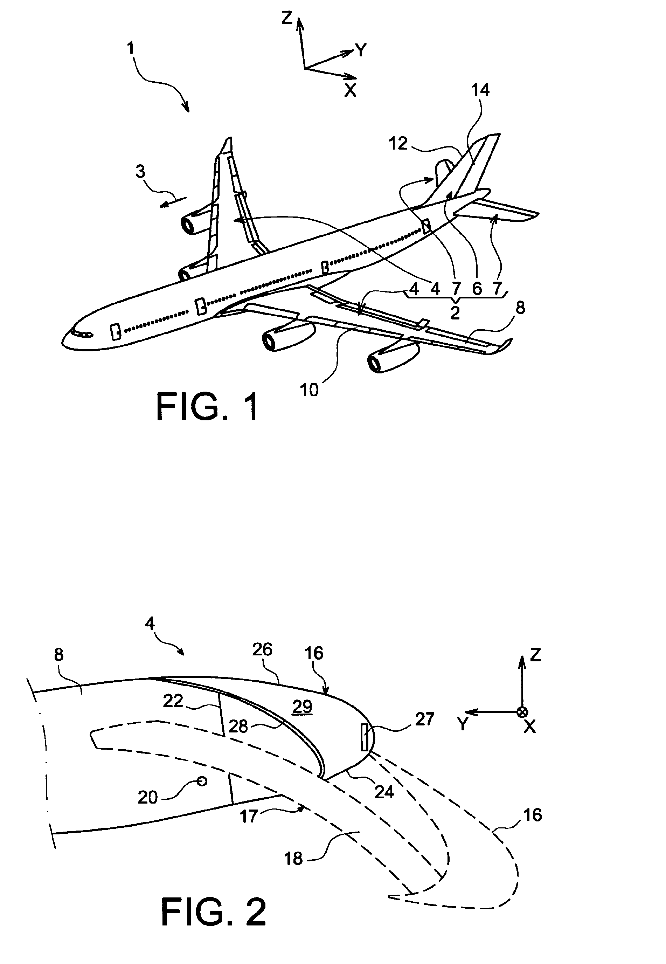

En référence à la figure 1, on voit un aéronef 1 disposant d'une voilure 2 constituée d'une pluralité d'éléments de voilure, encore appelés surfaces aérodynamiques portantes.

Dans toute la description qui va suivre, les termes « avant » et « arrière » sont à considérer par rapport à une direction d'avancement de l'aéronef rencontrée suite à la poussée exercée par les moteurs de l'aéronef, cette direction étant représentée schématiquement par la flèche 3.

Parmi les éléments de voilure de l'aéronef 1, on compte deux ailes principales, dites ailes 4, une dérive verticale 6, ainsi que deux empennages horizontaux 7 situés à l'arrière de cet aéronef. Chacune des deux ailes 4 est susceptible d'être équipée d'au moins un volet mobile de bord d'attaque relié à un corps central fixe d'aile par une chaîne porteuse de câbles selon l'invention, comme cela sera exposé de façon détaillée ci-dessous pour l'une de ces deux ailes.

En ce qui concerne les ailes 4, comme évoqué ci-dessus, celles-ci comprennent chacune un corps central fixe d'aile 8, également dénommé portion centrale principale, ce corps constituant quasiment l'intégralité de l'aile, et étant situé en arrière d'un bord d'attaque 10. Ici encore, dans toute la description qui va suivre, par convention, on appelle X la direction longitudinale de bord d'attaque, ou encore direction d'envergure, Y la direction orientée transversalement par rapport au bord d'attaque 10 de l'aile 4, et Z la direction verticale, ces trois directions étant orthogonales entre-elles.

Ainsi, comme le montre la figure 2, c'est effectivement le bord d'attaque de chacune des deux ailes 4 qui peut être équipé d'au moins un volet mobile de bord d'attaque 16, chacun destiné à être relié aux corps 8 par une chaîne porteuse de câble selon l'invention, non représentée sur cette figure. En revanche, sur cette figure 2, on peut voir que le volet mobile de bord d'attaque 16, représenté uniquement schématiquement, peut occuper une position rétractée/rentrée dans laquelle il épouse la partie avant du corps central fixe 8 de l'aile 4, comme cela est montré en traits pleins. De plus, les traits en pointillés représentent le volet mobile 16 dans sa position entièrement déployée où il est à distance vers l'avant du corps central fixe 8, cette position déployée étant adoptée durant les phases d'atterrissage et de décollage afin d'augmenter la portance à faible ou moyenne vitesse. Il est noté que pour passer de l'une à l'autre des deux positions extrêmes représentées, l'aile 4 comporte des mécanismes de déplacement 17 intégrés essentiellement dans la partie avant du corps central 8, ces mécanismes 17 étant bien connus de l'homme du métier.

Plus précisément, pour chaque volet 16, le mécanisme 17 comprend généralement un ou plusieurs rails courbes 18, de profil circulaire, relié fixement au volet 16 par son extrémité avant. Un engrenage ou similaire (non représenté) commandé par un arbre ou bras rotatif d'actionnement 20 permet de déplacer le volet en rotation par rapport au corps fixe 8. A titre indicatif, l'arbre d'actionnement 20, tournant selon son axe, est logé à l'avant du corps fixe d'aile 8, de préférence selon la direction d'envergure, tout en restant en arrière d'une cloison ou longeron avant 22 également orientée selon la direction d'envergure, et reliant les portions intrados et extrados du corps fixe d'aile 8.

A titre indicatif, le volet mobile 16 s'étend par exemple sur sensiblement toute la longueur de l'aile 4 concernée, bien entendu selon la direction d'envergure de cette aile 4, ou bien uniquement sur une portion seulement de cette aile, comme cela est le plus courant sur les aéronefs.

Le volet 16 comporte un revêtement aérodynamique définissant une portion intrados 24 ainsi qu'une portion extrados 26. De plus, il est fermé vers l'arrière par un revêtement de fermeture 28, destiné à épouser le corps fixe d'aile 8 lorsqu'il occupe la position rentrée montrée en traits pleins.

Les revêtements extérieurs 24, 26, 28 définissent conjointement un compartiment 29 dans lequel se trouvent habituellement un ou plusieurs systèmes/équipements nécessitant d'être reliés par des câbles au corps fixe 8, tel qu'un système de dégivrage électrique 27 représenté schématiquement sur la figure 2.

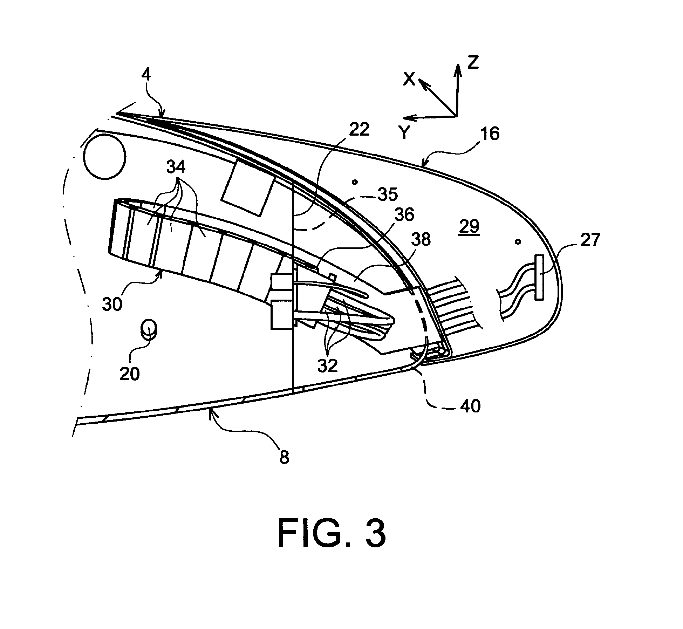

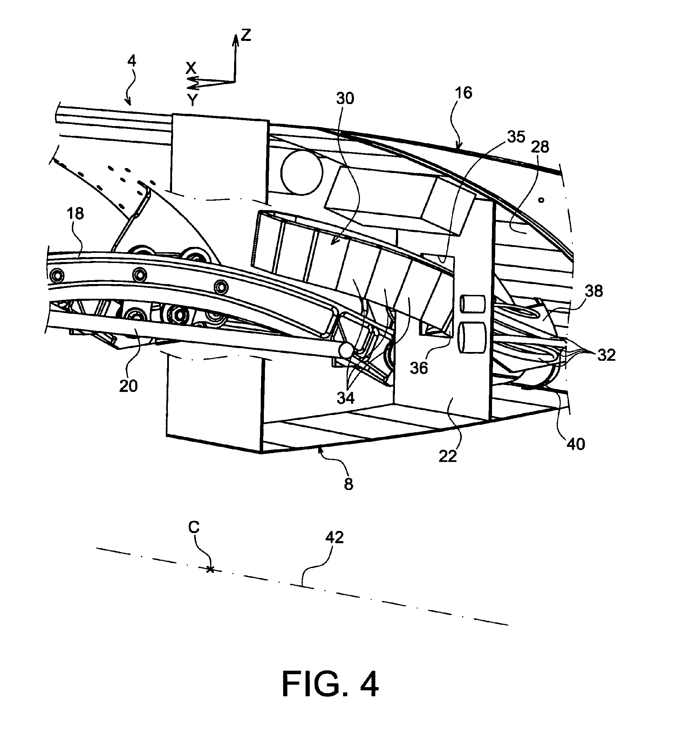

Ainsi, pour que les câbles en question puissent suivre correctement le mouvement du volet 16 lors de son déploiement et de sa rentrée, il est mis en place, entre ce volet 16 et le corps fixe 8, une chaîne 30 permettant de porter ces mêmes câbles 32 comme montré sur les figures 3 et 4, cette chaîne 30 remplissant alors une fonction d'acheminement / de guidage / de support des câbles entre le volet mobile 16 et le corps fixe 8.

Comme cela sera détaillé ci-après, la chaîne 30 présente une conception parfaitement adaptée à la nature rotative du déplacement relatif du volet mobile 16 par rapport au corps fixe 8. A cet égard, la chaîne 30, qui est globalement constituée de maillons centraux 34 sensiblement identiques, et de deux maillons d'extrémité de chaîne pouvant différer des maillons centraux, traverse éventuellement un passage 35 pratiqué dans la cloison avant 22. Par ailleurs, le premier maillon d'extrémité de chaîne 36 est solidarisé au bord d'attaque du corps central fixe d'aile 8, par exemple au niveau de la cloison avant 22, tandis que le second maillon d'extrémité de chaîne 38 est solidarisé au revêtement de fermeture 28 du volet. Pour ce faire, ce second maillon 38 traverse une ouverture 40 pratiquée dans le revêtement avant du corps central fixe 8, l'étendue de cette ouverture étant avantageusement faible en raison de la conception de la chaîne parfaitement adaptée à la nature rotative du déplacement du volet 16. A ce titre, il est noté que le mouvement relatif de rotation du volet 16 s'effectue selon un axe de rotation 42 déporté vers le bas par rapport à l'aile 4, cet axe 42 étant de préférence parallèle à la direction d'envergure, et parallèle à l'arbre rotatif d'actionnement 20 logé dans le corps fixe 8.

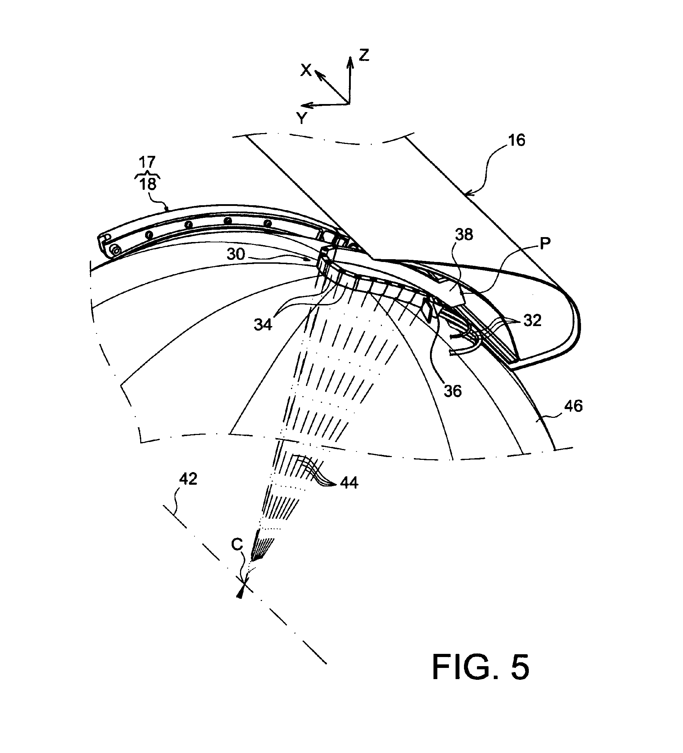

La conception de la chaîne 30 porteuse de câbles 32 va à présent être décrite, dans un premier temps en référence aux figures 5 à 7.

L'une des particularités de la présente invention consiste à prévoir que les maillons centraux 34, de préférence l'intégralité d'entre eux, soient articulés les uns aux autres selon des axes d'articulation 44 convergents tous vers un point unique C, situé sur l'axe de rotation 42 du volet mobile 16. De plus, l'axe d'articulation entre le premier maillon d'extrémité 36 et le premier maillon central 34 de la chaîne passe également par le point C, tout comme l'axe d'articulation entre le second maillon d'extrémité 38 et le dernier maillon central 34.

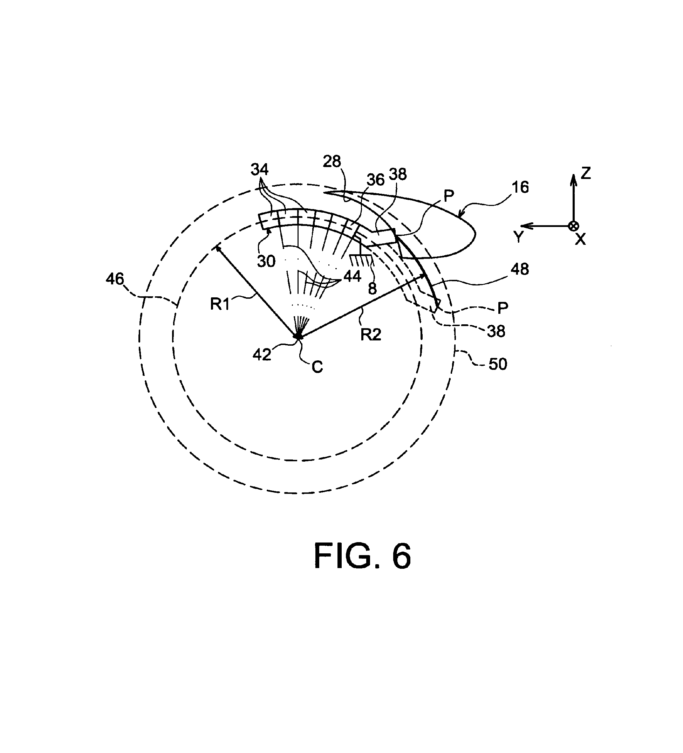

Comme cela est le mieux visible sur les figures 5 et 6, les maillons 34, 36, 38 sont agencés sur une surface sphérique 46 ayant pour centre le point unique C vers lequel convergent les axes d'articulation 44, ce qui permet globalement d'obtenir une cinématique du mouvement de la chaîne s'inscrivant sensiblement sur cette même surface sphérique 46. En d'autres termes, lorsque le second maillon d'extrémité 38 est entraîné par la mise en mouvement du volet 16, tous les maillons de la chaîne se déplacent par rapport au corps fixe 8, tout en restant agencés sur la surface sphérique 46 précitée, à l'exception bien entendu du premier maillon d'extrémité 36 qui reste fixé sur la cloison avant 22 du corps fixe 8. A titre indicatif, sur la figure 6, la ligne pointillée 46 représente la circonférence de la surface sphérique dans un plan équateur de celle-ci, ce qui explique en particulier la raison pour laquelle les maillons de chaîne se situent radialement vers l'intérieur par rapport à cette ligne.

La cinématique de la chaîne 30 est alors extrêmement proche de la cinématique du volet 16, dont la trajectoire de son mouvement par rapport au corps fixe 8 est un arc de cercle 48, tel que cela est également montré sur la figure 6. A cet égard, il est noté que la trajectoire circulaire 48 du volet 16 s'inscrit sur une sphère 50 disposant du même centre C que la surface sphérique 46, placé sur l'axe de rotation 42. La trajectoire 48 est basée à partir d'un point P pris arbitrairement sur le volet 16, et qui se trouve ici à l'interface entre le revêtement de fermeture 28 du volet, et le second maillon d'extrémité 38. Naturellement, dans la vue telle que montrée sur la figure 6, la trajectoire de chacun des points du volet 16 est identique, et de toute façon inscrite sur une sphère de centre C de rayon R2, qui, dans l'exemple représenté, est supérieur au rayon R1 de la surface sphérique 46 sur laquelle se trouvent et se déplacent les maillons de chaîne.

Ainsi, comme mentionné ci-dessus, la trajectoire 48 du volet est agencée sur la sphère 50 de centre C correspondant au point unique vers lequel convergent les axes d'articulation 44. Néanmoins, cette trajectoire 48 n'est pas nécessairement située dans un plan équateur de cette sphère 50, mais peut être agencée dans tout plan traversant cette sphère de façon orthogonale à l'axe de rotation 42 intégrant le centre C, comme cela est d'ailleurs le cas dans l'exemple représenté. En effet, sur la figure 6, la ligne pointillée 50 représente la circonférence de la sphère 50 dans un plan équateur de celle-ci. La position radiale vers l'intérieur de la trajectoire 48 par rapport à la ligne 50 montre bien qu'elle n'est pas située dans un plan équateur de la sphère, mais dans un plan parallèle à celui-ci, et orthogonal à l'axe de rotation 42.

Par conséquent, il est à comprendre que la position de la trajectoire 48 sur la sphère 50, de même que la position des maillons sur la surface sphérique 46, dépend de la position du centre C sur l'axe de rotation 42, qui peut être choisie librement par le concepteur. Cette spécificité offre une large possibilité de conception pour la chaîne 30, permettant de s'adapter au mieux aux contraintes d'encombrement rencontrées au sein du corps fixe d'aile 8.

A titre indicatif, il est noté que le fait d'excentrer le point C sur l'axe de rotation 42, par rapport à la chaîne 30, permet d'incliner cette chaîne par rapport à la direction de l'envergure de l'aile, ce qui peut procurer un avantage notable en fonction de l'architecture interne rencontrée pour le corps 8.

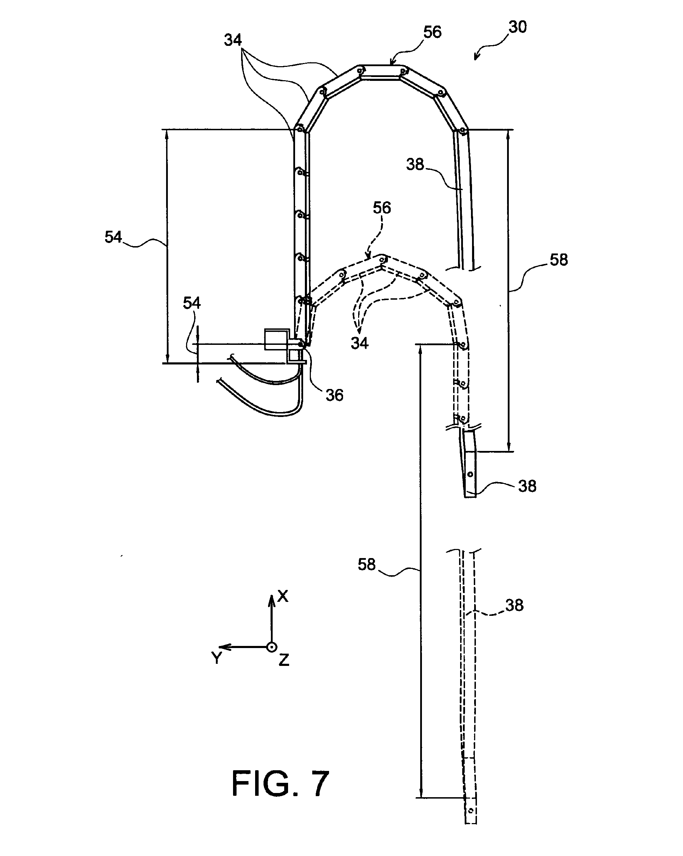

En référence plus précisément à la figure 7 montrant une vue de dessus, la chaîne 30 en traits pleins représente sa position telle qu'occupée lorsque le volet 16 est rentré. Comme cela sera détaillé ci-après, les butées observées entre les maillons permettent d'obtenir une chaîne auto-stable, qui ne peut donc pas changer de configuration tant que son second maillon d'extrémité 38 n'a pas été mis en mouvement par le volet 16. Ainsi, les risques d'entrer en contact avec les parois du passage 35 qu'elle traverse sont quasiment réduits à néant.

Dans cette position et en vue de dessus, la chaîne auto-stabilisée 30 portant les câbles 32 prend sensiblement la forme d'un U. Plus précisément, elle comprend une première portion sensiblement rectiligne 54, initiée à partir du premier maillon d'extrémité 36, et se poursuivant par une pluralité de maillons centraux adjacents 34, agencés dans une continuité linéaire les uns des autres. A son autre extrémité, cette portion rectiligne 54 est suivie par une partie courbe 56, constituée par une pluralité de maillons centraux adjacents 34, inclinés les uns par rapport aux autres. L'inclinaison entre deux maillons 34 quelconques directement consécutifs est de préférence régulière de manière à obtenir la forme courbe désirée, cette inclinaison étant d'ailleurs fixée de manière à ce que la sollicitation des câbles 32, logés au sein de ces maillons, ne soit pas supérieure à celle qu'ils sont capables de supporter, notamment en ce qui concerne leur limite en flexion.

A cet égard, l'amplitude de pivotement relatif entre deux maillons quelconques 34 et directement consécutifs, qui est limitée par un système de butées qui sera explicité ci-après, est de préférence de l'ordre de 30° ou inférieure, à partir d'une position dans laquelle les deux maillons 34 concernés sont dans l'alignement l'un de l'autre. De plus, le sens de ce pivotement est toujours le même quels que soient les maillons considérés, ce qui permet notamment d'obtenir une portion courbe 56 en forme de demi-cercle.

Cette portion 56 est alors suivie d'une seconde portion sensiblement rectiligne 58 terminée par un second maillon d'extrémité 38, et, dans le mode de réalisation préféré représenté, constituée uniquement par ce maillon d'extrémité 38 disposant d'une longueur largement supérieure à celle des autres maillons 34, 36, le rendant assimilable à un bras.

Lorsque le volet mobile 16 est mis en rotation autour de l'axe 42, à l'aide du mécanisme 17, le maillon d'extrémité 38 est mis en mouvement selon la même trajectoire, entraînant avec lui l'ensemble des maillons centraux 34 se déplaçant sur la surface sphérique 46, montrée sur la figure 6. Sur cette même figure montrant la chaîne 30 vue dans la direction de l'axe de rotation 42, les maillons 34, 36, 38 des deux portions rectiligne 54, 58 se confondent partiellement. De plus, on peut apercevoir que la trajectoire de la chaîne, toujours vue sous l'angle indiqué ci-dessus, est quasiment superposable à la trajectoire 48 du volet, ce qui illustre effectivement la forte similitude entre la cinématique réelle de la chaîne 30, et celle du volet 16. C'est cette caractéristique en particulier qui permet de prévoir une ouverture 40 de faible étendue dans la partie avant du corps fixe 8, favorable à un bon rendement aérodynamique.

De retour à la figure 7, lorsque le maillon d'extrémité 38 est mis en mouvement, le dernier maillon central 34 de la première portion rectiligne 54 est pivoté progressivement par rapport à l'avant dernier maillon 34 de cette même portion rectiligne 54, jusqu'à ce que l'amplitude de pivotement maximale soit atteinte entre ces deux maillons centraux 34. A partir de cet instant, le dernier maillon central 34 qui ne faisait jusqu'à lors que pivoter par rapport à l'avant dernier maillon 34, et, de manière plus générale, par rapport à la surface sphérique 46 considérée fixe par rapport au corps 8, est ensuite mis en mouvement par rapport à cette même surface sphérique 46, avec les maillons suivants de la portion courbe 56 qu'il vient d'intégrer.

Simultanément, lorsque le maillon d'extrémité 38 est mis en mouvement, assimilable à une translation en vue de dessus, le dernier maillon central 34 de la portion courbe 56 est pivoté progressivement par rapport au dernier maillon de la seconde portion sensiblement rectiligne 58, à savoir le second maillon d'extrémité 38, jusqu'à ce qu'un alignement soit obtenu entre les deux maillons concernés, initialement pivotés l'un par rapport à l'autre selon l'amplitude maximale. A partir de cet instant, le maillon central concerné 34 fait partie intégrante de la seconde portion sensiblement rectiligne 58, et se retrouve donc entraîné selon une trajectoire circulaire identique à celle du second maillon d'extrémité 38.

L'agencement proposé permet donc de présenter des première et seconde portions rectilignes 54, 58 restant sensiblement parallèles et à égale distance au cours du mouvement de la chaîne 30, lors du déploiement / de la rentrée du volet mobile 16, de sorte que la cinématique de la chaîne 30 est parfaitement maîtrisée et auto-stabilisée à chaque instant.

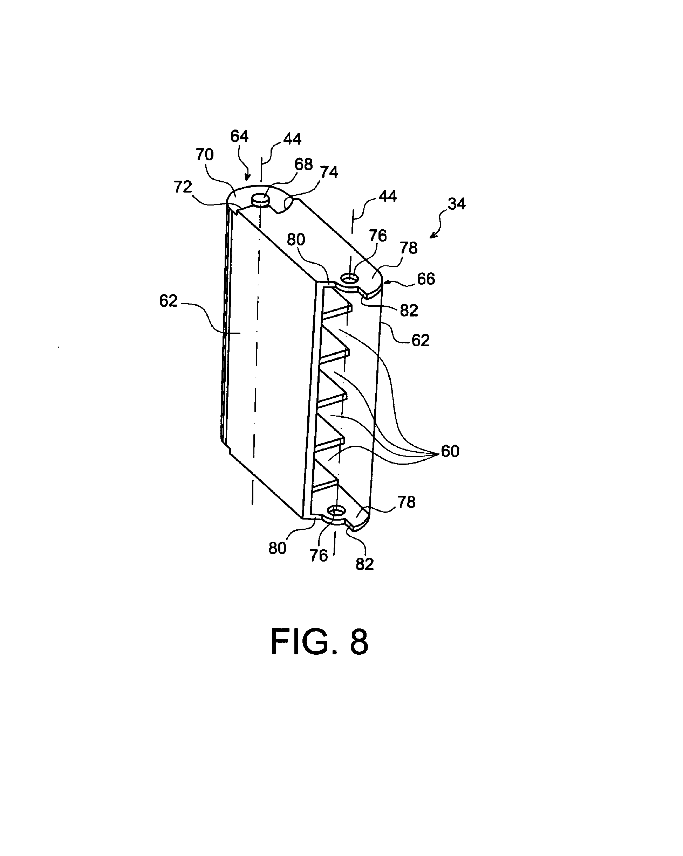

En référence à présent à la figure 8, on peut apercevoir l'un des maillons centraux 34 de la chaîne 30, celui-ci définissant à titre d'exemple plusieurs logements adjacents 60 de passage de câble, chacun débouchant de part et d'autre du maillon 34, dans la direction de la chaîne. Ainsi, des câbles passant par ces logements 60 sont protégés par les deux plaques latérales 62 parallèles et opposées du maillon, ce qui réduit fortement les risques d'endommagement mécanique de ces câbles, et réduit l'exposition aux agents atmosphériques externes. Avec une telle configuration préférée, on considère que les câbles électriques 32 sont localisés et protégés « à l'intérieur » de la chaîne porteuse.

Le maillon 34 dispose d'une extrémité male 64 et d'une extrémité opposée femelle 66 complémentaire de celle-ci, étant naturellement entendu que l'extrémité male d'un maillon quelconque de la chaîne est destinée à coopérer avec l'extrémité femelle du maillon direction consécutif, et inversement.

L'extrémité male 64 comporte deux pions d'articulation 68 (un seul étant visible en raison de la vue en perspective) agencés selon l'axe 44, le premier étant prévu sur le haut du maillon en faisant saillie vers le haut à partir d'un renfoncement 70, et le second étant prévu sur le bas du maillon en faisant saillie vers le bas à partir d'un renfoncement analogue. Chaque renfoncement 70 est limité par une première surface de butée 72, et une seconde surface de butée 74.

L'extrémité femelle 66 comporte quant à elle deux orifices d'articulation 76 agencés selon l'axe 44, le premier étant prévu sur le haut du maillon sur un flanc 78, et le second étant prévu de la même façon sur un flanc 78, placé sur le bas du maillon. Chaque flanc 78 présente une première surface de butée 80, et une seconde surface de butée 82.

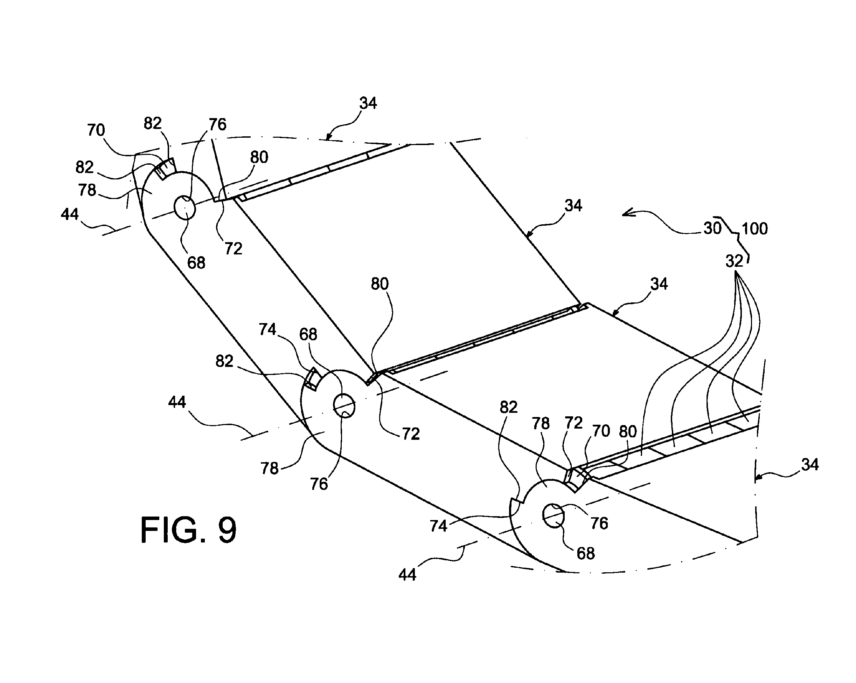

Ainsi, comme cela est visible sur la figure 9 montrant un ensemble 100 comprenant la chaîne 30 logeant les câbles 32, les maillons centraux 34 coopèrent deux à deux de manière à ce que les pions 68 soient logés dans leurs orifices correspondants 76, afin de définir les axes d'articulations 44. Par ailleurs, pour obtenir cette coopération, les flancs 78 sont positionnés dans leurs évidements respectifs 70.

En ce qui concerne les deux premiers maillons alignés 34, ceux-ci font partie de la première portion rectiligne précitée, et sont bloqués en rotation l'un par rapport à l'autre par mise en contact deux à deux des secondes surfaces de butée 74, 82, les premières surfaces de butée 72, 80 étant à distance les unes des autres.

En ce qui concerne les deux derniers maillons 34 pivotés de l'amplitude maximale l'un par rapport à l'autre, ceux-ci font partie de la portion courbe précitée, et sont bloqués en rotation l'un par rapport à l'autre par mise en contact deux à deux des premières surfaces de butée 72, 80, les secondes surfaces de butée 74, 82 étant à distance les unes des autres.

En ce qui concerne les deux maillons centraux 34 montrés sur la figure 9, ceux-ci sont représentés en étant partiellement pivotés l'un par rapport à l'autre, cette position évolutive étant adoptée durant la mise en mouvement de la chaîne 30 conduisant à faire passer le dernier maillon central 34 de la première portion rectiligne, à la portion courbe.

A ce stade, le contact entre les secondes surfaces de butée 74, 82 a été rompu. Néanmoins, en raison du fait que l'amplitude maximale de pivotement entre ces deux maillons n'a pas encore été atteinte, les secondes surfaces de butée 74, 82 ne sont pas encore en contact.

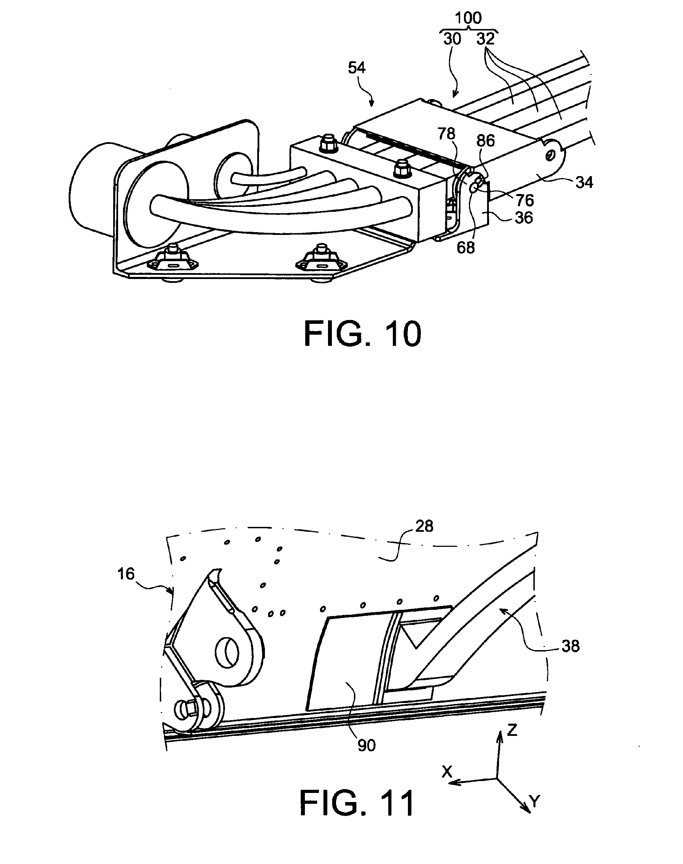

La figure 10 montre que le premier maillon central 34 de la première portion rectiligne 54 peut être montée de façon amovible sur le premier maillon d'extrémité 36, par exemple par clipsage autorisé par la présence d'une encoche 86 pratiquée sur chaque flanc 78 et débouchant dans l'orifice d'articulation associé 76. Ainsi, le pion d'articulation 68 peut être introduit ou extrait de son orifice d'articulation associé 76 par glissement dans l'encoche 86 prévue à cet effet. Cette liaison mécanique est volontairement rompue par un opérateur lorsque le volet doit être démonté du corps central fixe d'aile, par exemple pour des raisons de maintenance. Par ailleurs, elle est automatiquement rompue suite à un choc en vol sur le volet conduisant à la perte de celui-ci, et ceci dans le but de ne pas endommager le corps central fixe d'aile portant ce volet.

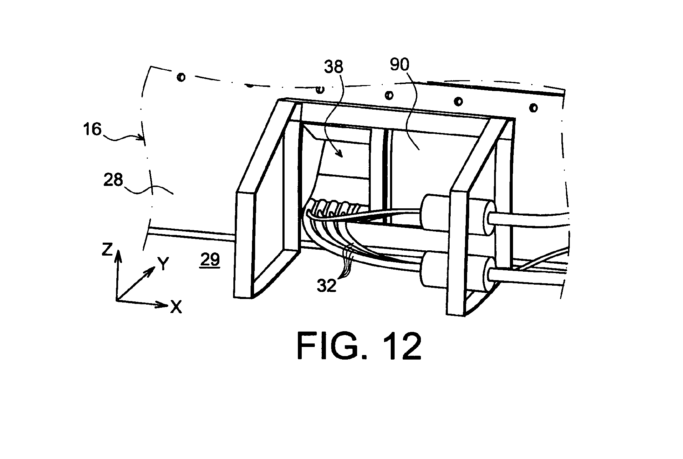

Enfin, les figures 11 et 12 montrent le raccordement du second maillon d'extrémité 38 en forme de bras, sur le revêtement de fermeture 28 du volet, à proximité d'une trappe d'accès 90 permettant de manipuler les câbles 32 issus du maillon 38 et agencés dans le compartiment 29 du volet mobile 16. Sur la figure 11, comme sur les figures 5 et 6, on peut apercevoir que le bras 38 est globalement de forme courbe, et plus spécifiquement de forme circulaire, afin de pouvoir lui aussi rester sur la surface sphérique 46, lors de sa mise en mouvement provoquée par le mouvement du volet 16.

Bien entendu, diverses modifications peuvent être apportées par l'homme du métier à l'invention qui vient d'être décrite, uniquement à titre d'exemples non limitatifs. A cet égard, il est noté que les volets mobiles qui viennent d'être décrits font référence à des volets du type « slat » susceptibles d'être déployés à l'aide de rails, mais que l'invention s'applique également à tout autre volet mobile, tel que ceux du type « drop nose » qui sont simplement articulés sur la portion fixe de l'aile.

## Revendications

1. Aile d'aéronef (4) comprenant un corps central fixe d'aile (8), ainsi qu'un volet mobile de bord d'attaque (16) destiné à être déplacé en rotation par rapport audit corps central fixe selon une trajectoire circulaire (48) s'inscrivant sur une sphère (50) de centre (C), situé sur un axe de rotation (42) du volet mobile de bord d'attaque (16) par rapport audit corps central fixe d'aile (8),
**caractérisée en ce que** ladite aile comprend en outre un ensemble (100) comprenant une chaîne (30) ainsi qu'au moins un câble (32) porté par ladite chaîne raccordée fixement à ses deux extrémités respectivement au corps central fixe (8) et au volet mobile de bord d'attaque (16), ladite chaîne comprenant des maillons (34, 36, 38) articulés les uns aux autres selon des axes d'articulation (44) qui convergent au centre (C).

2. Aile (4) selon la revendication 1, **caractérisée en ce que** lesdits maillons articulés (34, 36, 38) sont agencés sur une surface sphérique (46) ayant pour centre ledit centre (C) vers lequel convergent lesdits axes d'articulation (44).

3. Aile (4) selon la revendication 1 ou la revendication 2, **caractérisée en ce que** l'amplitude de pivotement relatif entre deux maillons quelconques (34), et directement consécutifs, est limitée par un système de butées.

4. Aile (4) selon la revendication 3, **caractérisée en ce que** l'amplitude de pivotement relatif est inférieure ou égale à 30°.

5. Aile (4) selon l'une quelconque des revendications précédentes, **caractérisée en ce que** ladite chaîne (30) présente, en vue de dessus et quelle que soit la position dudit volet mobile de bord d'attaque (16) par rapport au corps central fixe d'aile (8), une première portion sensiblement rectiligne (54) initiée à partir d'un premier maillon d'extrémité de chaîne (36) monté fixement sur ledit corps central fixe d'aile (8), une partie courbe (56), ainsi qu'une seconde portion sensiblement rectiligne (58) terminée par un second maillon d'extrémité de chaîne (38) monté fixement sur ledit volet mobile de bord d'attaque (16).

6. Aile (4) selon la revendication 5, **caractérisée en ce que** ladite partie courbe (56) forme sensiblement une portion de cercle en vue de dessus.

7. Aile (4) selon l'une quelconque des revendications précédentes, **caractérisée en ce que** ladite chaîne (30) porte un ou plusieurs câbles électriques (32).

8. Aile (4) selon l'une quelconque des revendications précédentes, **caractérisée en ce que** ladite chaîne (30) porte un ou plusieurs câbles électriques (32) d'alimentation d'un système de dégivrage (27) intégré au volet mobile de bord d'attaque (16).

## Claims

1. Aircraft wing (4) comprising a wing fixed central body (8), and a leading edge mobile slat (16) designed to be moved in rotation relative to said fixed central body along a circular trajectory (48) inscribed on a sphere (50) with centre (C), located on a rotation axis (42) of the leading edge mobile slat (16) relative to said wing fixed central body (8);
**characterised in that** said wing also comprises an assembly (100) comprising a chain (30) and at least one cable (32) supported by said chain connected rigidly at its two ends to the fixed central body (8) and to the leading edge mobile slat (16) respectively, said chain comprising links (34, 36, 38) articulated to each other through articulation axes (44) that converge towards the centre (C).

2. Wing (4) according to claim 1, **characterised in that** said articulated links (34, 36, 38) are arranged on a spherical surface (46) centred on said centre (C) towards which said articulation axes converge (44).

3. Wing (4) according to claim 1 or claim 2, **characterised in that** the amplitude of the relative pivoting between any two consecutive links (34) is limited by a system of stops .

4. Wing (4) according to claim 3, **characterised in that** the relative pivoting amplitude is less than or equal to 30°.

5. Wing (4) according to any one of the previous claims, **characterised in that** a top view of said chain (30) shows a first approximately straight portion (54) starting from a first chain end link (36) fixed onto said wing fixed central body (8), a curved part (56), and a second approximately straight portion (58) terminated by a second chain end link (38) rigidly fixed onto said leading edge mobile slat (16), regardless of the position of said leading edge mobile slat (16) relative to the wing fixed central body (8).

6. Wing (4) according to claim 5, **characterised in that** said curved part (56) forms approximately a portion of a circle as seen in a top view.

7. Wing (4) according to any one of the previous claims, 1 **characterised in that** said chain (30) supports one or several electrical cables (32).

8. Wing (4) according to any one of the previous Claims, **characterised in that** said chain (30) supports one or several electrical cables (32) supplying power to a de-icing system (27) integrated into the leading edge mobile slat (16).

## Patentansprüche

1. Flugzeugtragfläche (4) mit einem festgelegten zentralen Tragflächenkörper (8) sowie einer mobilen Nasenklappe (16), die dazu bestimmt ist, in Drehung bezüglich des festgelegten zentralen Körpers nach einer kreisförmigen Bahn (48) verschoben zu werden, die sich an einer Kugel (50) mit dem Zentrum (C) einschreibt, das an einer Rotationsachse (42) der mobilen Nasenklappe (16) bezüglich des festgelegten zentralen Tragflächenkörpers (8) liegt,
**dadurch gekennzeichnet, dass** die Tragfläche ferner eine Einheit (100) mit einer Kette (30) sowie wenigstens einem Kabel (32) aufweist, das von der Kette getragen wird, die an ihren zwei Enden fest an den festgelegten zentralen Körper (8) bzw. die mobile Nasenklappe (16) angeschlossen ist, wobei die Kette Glieder (34, 36, 38) aufweist, die aneinander nach Gelenkachsen (44) angelenkt sind, die im Zentrum (C) zusammenlaufen.

2. Tragfläche (4) nach Anspruch 1, **dadurch gekennzeichnet, dass** die angelenkten Glieder (34, 36, 38) an einer kugelförmigen Fläche (46) angeordnet sind, die als Zentrum das Zentrum (C) hat, zu welchem die Gelenkachsen (44) zusammenlaufen.

3. Tragfläche (4) nach Anspruch 1 oder Anspruch 2, **dadurch gekennzeichnet, dass** die Amplitude der relativen Verschwenkung zwischen zwei beliebigen und direkt aufeinanderfolgenden Gliedern (34) durch ein System von Anschlägen begrenzt ist.

4. Tragfläche (4) nach Anspruch 3, **dadurch gekennzeichnet, dass** die Amplitude der relativen Verschwenkung kleiner oder bleich 30° ist.

5. Tragfläche (4) nach einem der vorhergehenden Ansprüche, **dadurch gekennzeichnet, dass** die Kette (30) in Draufsicht und unabhängig von der Position der mobilen Nasenklappe (16) bezüglich des festgelegten zentralen Tragflächenkörpers (8) eine ersten, im Wesentlichen geradlinigen Abschnitt (54) zeigt, der ausgehend von einem ersten Kettenendglied (36) initiiert ist, das fest an dem festgelegten Tragflächenkörper (8) angebracht ist, ein gekrümmtes Abschnitt (56) sowie einen zweiten, im Wesentlichen geradlinigen Teil (58), der durch ein zweites Kettenendglied (38) abgeschlossen ist, das fest an der mobilen Nasenklappe (16) angebracht ist.

6. Tragfläche (4) nach Anspruch 5, **dadurch gekennzeichnet, dass** das gekrümmte Teil (56) in Draufsicht im Wesentlichen einen Kreisabschnitt bildet.

7. Tragfläche (4) nach einem der vorhergehenden Ansprüche, **dadurch gekennzeichnet, dass** die Kette (30) ein oder mehrere elektrische Kabel (32) trägt.

8. Tragfläche (4) einem der vorhergehenden Ansprüche, **dadurch gekennzeichnet**, das die Kette (30) ein oder mehrere elektrische Versorgungskabel (32) eines Enteisungssystems (27) trägt, das in die mobile Nasenklappe (16) integriert ist.
